# EUROPÄISCHE PATENTANMELDUNG

(11) **EP 2 842 630 A1**
(43) Veröffentlichungstag der Anmeldung: **04.03.2015**
(21) Anmeldenummer: 14182768.3
(22) Anmeldetag: 29.08.2014
(51) Int. Cl.: B02C 18/14, B02C 18/22, B29B 9/06, F16H 55/08

(54) **Stranggranulator**

(30) Priorität: 03.09.2013 DE 102013109599
(71) Anmelder: Reduction Engineering GmbH, 70825 Korntal-Münchingen (DE)
(72) Erfinder: Zollitsch, Ludwig, 70825 Korntal-Münchingen (DE); Kreuz, Ulrich, 71729 Erdmannhausen (DE)
(74) Vertreter: Klunker . Schmitt-Nilson . Hirsch

(57) **Zusammenfassung**

Ein Stranggranulator (10) umfasst eine untere (30) und eine obere Einzugswalze (20) zum Einziehen von zu granulierenden Strängen (80) zwischen den Einzugswalzen (20; 30) hindurch sowie ein Ambossmesser (40) und eine Messerwalze (50) zum Granulieren der eingezogenen Stränge. Zumindest eine der Einzugswalzen (20; 30) und die Messerwalze (50) sind relativ zueinander verlagerbar und über Zahnräder miteinander koppelbar. Die Geometrie der Zahnradzähne basiert bevorzugt auf einem Ausgangsprofil (A) gemäß einer Evolventenverzahnung oder einer Zykloidenverzahnung. Dieses Ausgangsprofil (A) wird dahingehend modifiziert, dass zumindest eine Flanke der Zahnradzähne in einem ersten Flankenbereich (f1) dem Ausgangsprofil folgt und in einem zweiten Flankenbereich (2) am kopfseitigen Ende zur Zahnmitte hin von einer die Flanke gemäß dem Ausgangsprofil (A) definierenden Rollkurve abweicht.

## Beschreibung

Die vorliegende Erfindung betrifft einen Stranggranulator. Genauer betrifft die Erfindung einen Stranggranulator mit einer unteren Einzugswalze und einer oberen Einzugswalze zum Einziehen von zu granulierenden Strängen zwischen den Einzugswalzen hindurch. Der Stranggranulator umfasst weiterhin ein Ambossmesser und eine Messerwalze zum Granulieren der eingezogenen Stränge. Zumindest eine der beiden Einzugswalzen und die Messerwalze sind relativ zueinander verlagerbar und über Zahnräder miteinander koppelbar.

Dadurch, dass eine Einzugswalze, beispielsweise die untere Einzugswalze, welche mit der Messerwalze über Zahnräder gekoppelt ist, relativ zur Messerwalze verlagert werden kann, wird z.B. eine Reinigung oder Wartung des Granulators erleichtert. Werden nun, beispielsweise nach dem Reinigen, die Einzugswalze und die Messerwalze wieder zueinander hingeführt, um die beiden Walzen zum Betrieb des Granulators über die Zahnräder zu koppeln, kann es vorkommen, dass Zahnköpfe der Zahnräder stumpf aufeinanderstoßen, da die relative Lage der Zahnräder zueinander ein direktes Einfädeln der Zahnräder verhindert. Ein solches Aufeinanderstoßen der Zahnköpfe kann auf die Dauer zu Verschleiß und Beschädigungen der Zahnräder führen und ist daher unerwünscht und zu vermeiden.

Im Stand der Technik bekannte Einfädelhilfen können zwar ein Einfädeln der Zahnräder beim Zusammenführen derselben unterstützen, verteuern aber gleichzeitig die entsprechenden Maschinen und machen diese komplizierter und aufwändiger zu warten. Beispielsweise ist es bekannt, Sternscheiben auf den Zahnradwellen zusätzlich mit anzuordnen, deren spitze Zacken die Zahnköpfe radial überragen, so dass die Zacken der Sternscheiben beim Zusammenschieben der Zahnräder einfädeln und die Zahnradwellen zueinander ausrichten, noch bevor die Zahnköpfe aufeinander schlagen können. Derartige Sternscheiben verteuern die Fertigung.

Aufgabe der vorliegenden Erfindung ist es, ein Einfädeln der Zahnräder mit geringen Herstellungskosten zu erreichen.

Diese Aufgabe wird durch einen Stranggranulator, eine Einzugswalze und eine Messerwalze mit den Merkmalen der unabhängigen Ansprüche gelöst. Bevorzugte Ausgestaltungen und Weiterbildungen sind in den abhängigen Ansprüchen angegeben.

Die Erfindung beruht auf dem Grundgedanken, Zahnköpfe der Zahnradzähne mit einer derartigen Geometrie auszubilden, dass beim Zusammenführen der Zahnräder ein stumpfes Aufeinandertreffen von Zahnköpfen verhindert oder zumindest unwahrscheinlich gemacht wird. Unter einem stumpfen Zusammentreffen wird vorliegend ein Aufeinanderstoßen zweier im Wesentlichen ebener oder allenfalls ganz leicht gekrümmter Flächen im Bereich der Zahnköpfe verstanden, wobei als ganz leichte Krümmung gerade noch die Krümmung des Umfangs einer Kreisscheibe zu verstehen ist, aus der die Zahnzwischenräume zum Herstellen der Zahnräder herausgearbeitet, beispielsweise herausgefräst, werden. Eine ebene oder ganz leichte Krümmung in diesem Sinne wird nachfolgend auch mit "im wesentlichen eben" bezeichnet.

Die Geometrie der Zahnradzähne basiert dazu bevorzugt auf einem Ausgangsprofil gemäß einer Evolventenverzahnung oder einer Zykloidenverzahnung. Dieses Ausgangsprofil wird dahingehend modifiziert, dass zumindest eine Flanke der Zahnradzähne in einem ersten Flankenbereich, vorzugsweise einem fußseitigen Flankenbereich, dem Ausgangsprofil folgt, während die Flanke in einem zweiten Flankenbereich, am kopfseitigen Ende der Zähne, zur Zahnmitte hin von einer die Flanke gemäß dem Ausgangsprofil definierenden Rollkurve abweicht.

Besonders bevorzugt sind die Zahnköpfe abgerundet ausgebildet. Jedoch sind auch spitz zulaufende Zahnköpfe geeignet. Die Begriffe "abgerundet" und "spitz zulaufend" sind dabei derart zu verstehen, dass der modifizierte Zahn in einem Querschnitt orthogonal zu der das Zahnrad tragenden Welle abgerundet oder spitz zulaufend erscheint. Die Zahnköpfe sind erfindungsgemäß derart abgerundet oder spitz zulaufend, dass sie an ihrer radial äußersten Stelle nicht eben oder "ganz leicht gekrümmt", wie eingangs definiert, sind. Ideal ist beispielsweise eine durchgängige Krümmung zumindest im radial äußersten Bereich der Zahnköpfe. Mit anderen Worten sind die Zahnköpfe vollständig abgerundet oder spitz zulaufend.

Ein stumpfes Aufeinanderstoßen der Zahnköpfe wird somit bereits dadurch verhindert, dass die Geometrie der Zahnköpfe selbst ein stumpfes Aufeinandertreffen nicht mehr erlaubt, da die Zähne praktisch keine ebenen Flächen mehr aufweisen, die in dieser Weise aufeinandertreffen könnten. Sobald wie vorstehend beschrieben geformte Zahnköpfe beim Zusammenführen der Zahnräder aufeinandertreffen, sorgt die beschriebene Zahnkopfgeometrie dafür, dass die Zähne der Zahnräder aneinander vorbei geführt werden und ein Einfädeln der Zahnräder vorteilhaft unterstützt wird. Es hat sich ergeben, dass eine Beschädigung der Zahnköpfe beim Zusammenführen, auch wenn eine optimale relative Lage der Zahnräder zueinander zum Einfädeln der Zahnräder im Moment des Zusammentreffens nicht vorliegt, praktisch ausgeschlossen wird.

Während - noch mit herkömmlicher Zahnkopfgeometrie - in den Fällen, in denen die jeweiligen Zahnräder beispielsweise entlang einer bogenförmigen Linie, d.h. mittels einer Schwenkbewegung, zueinander geführt werden, weniger Probleme mit dem stumpfen Aufeinanderstoßen von Zahnköpfen beobachtet worden sind, war dies bei einem linearen Zusammenführen der Zahnräder öfter zu beobachten. Dies galt insbesondere dann, wenn die gerade Linie, entlang der die Zahnräder zum Zusammenführen verlagert worden waren, derart verlief, dass sie - im Querschnitt betrachtet - die Mittelpunkte der jeweiligen Zahnräder verbindet. Die erfindungsgemäße Zahnkopfgeometrie mit den vollständig abgerundeten oder spitz zulaufenden Zahnköpfen hat sich somit insbesondere in den Fällen als besonders wirkungsvoll herausgestellt, in denen das Zahnrad der zumindest einen Einzugswalze und das Zahnrad der Messerwalze, über welche Zahnräder die Einzugswalze mit der Messerwalze koppelbar ist, beim Zusammenführen relativ zueinander entlang einer geraden Linie verlagert werden, die jeweils senkrecht zu den Drehachsen der Zahnräder steht und die jeweiligen Drehachsen verbindet.

Die beschriebenen Modifikationen der bekannten Ausgangsprofile lassen diese über große Bereiche der Flanken im Wesentlichen unverändert, so dass keine Beeinträchtigung der eigentlichen Funktionalität der Zahnräder zu befürchten ist. Die Modifikation der Flanken beschränkt sich, wie beschrieben, jeweils auf einen kleinen kopfseitigen Flankenbereich, so dass die effektive Flankenlänge, die den Eingriff der Zahnräder bereitstellt, lediglich geringfügig verringert wird. Dies ist unproblematisch, da in der Regel bereits ein weiterer Zahn in Eingriff kommt, bevor der aktuell in Eingriff stehende Zahn außer Eingriff kommt.

In der Regel kann ein modifiziertes Zahnprofil hergestellt werden, indem das Werkzeug, mit dem ansonsten das Ausgangsprofil hergestellt wird, einmalig geeignet angepasst wird. Insbesondere ist kein weiterer Herstellungsschritt zum Herstellen der modifizierten Zahnräder im Vergleich zum Herstellen herkömmlicher Zahnräder notwendig. Auch kann auf die eingangs erwähnten Sternscheiben auf beiden Zahnradachsen verzichtet werden, so dass die Herstellungskosten insgesamt sinken, denn die besonderen Zahnfräser können für die Herstellung einer Vielzahl von Zahnrädern verwendet werden.

Es versteht sich, dass vorzugsweise jeder Zahn eines Zahnrades in einer der beschriebenen Weisen modifiziert ist. Es ist möglich, dass Zähne eines Zahnrades auf verschiedene Weise modifiziert sind. Die Modifikation kann sich aber auch auf lediglich eine Teilmenge der Zähne eines Zahnrades, vorzugsweise einen überwiegenden Anteil, beschränken.

Die Modifikationen der Zähne des einen Zahnrades können dabei von der Modifikation der Zähne des anderen Zahnrades abweichen. Alternativ können die Zähne des einen Zahnrades in identischer oder analoger Weise wie die Zähne des anderen Zahnrades modifiziert sein.

Ein modifiziertes Zahnprofil kann symmetrisch oder unsymmetrisch sein. Bei symmetrischen Zahnprofilen sind beide Flanken in gleicher Weise im Vergleich zum Ausgangsprofil modifiziert. Bei unsymmetrischen Zahnprofilen kann beispielsweise lediglich eine Flanke im Vergleich zum Ausgangsprofil verändert sein oder die Modifikation verändert die Flanken eines Zahns in unterschiedlicher Weise. Die Modifikation, bei der lediglich eine Flanke eines Zahns verändert ist, kann insbesondere vorteilhaft bei Zahnrädern eingesetzt werden, welche stets in der gleichen Richtung betrieben werden. In diesem Fall kann ohne Verlust der Funktionalität des Zahnrades eine Flanke, beispielsweise eine nicht treibende oder nicht angetriebene Flanke, im Vergleich zum Ausgangsprofil modifiziert sein.

Bevorzugte Ausführungsformen eines abgerundeten Zahnprofils ergeben sich beispielsweise dadurch, dass ausgehend von einem Zahnprofil einer gewöhnlichen Evolventenverzahnung zumindest eine der Flanken am kopfseitigen Ende derart modifiziert wird, dass sich ein abgerundetes Kopfprofil auf dieser Seite der Flanke ergibt. Vorzugsweise werden beide Flanken in der gleichen Weise modifiziert. Das modifizierte Zahnprofil besitzt keine tangential zum Zahnradumfang verlaufende, im wesentlichen ebene Zahnkopffläche.

Dadurch, dass keine ebene Zahnkopffläche vorliegt, kann ein stumpfes Aufeinandertreffen von Zahnköpfen verhindert werden.

Um einen spitz zulaufenden Zahnkopf zu erhalten, kann, im Wesentlichen analog zur vorstehend beschriebenen abgerundeten Ausführungsform, ein Ausgangsprofil einer Evolventenverzahnung dahingehend modifiziert werden, dass ein kopfseitiger Anteil einer oder beider Flanken derart abgeflacht ausgebildet wird, dass sich die modifizierten Flankenbereiche bzw. der modifizierte Flankenbereich mit dem kopfseitigen Anteil der nicht modifizierten Flanke in einer Spitze treffen.

Das Verlagern der zumindest einen Einzugswalze relativ zu der Messerwalze kann bevorzugt dadurch erfolgen, dass die Einzugswalze entlang einer Führung von der Messerwalze weg- und zu der Messerwalze hinführbar ist. Diese Führung kann beispielsweise entlang einer geraden Linie verlaufen, welche jeweils senkrecht zu den beiden Drehachsen der Zahnräder steht. D.h. die Linie verläuft senkrecht zu der Drehachse des Zahnrades der Einzugswalze und senkrecht zu der Drehachse des Zahnrades der Messerwalze und verbindet die jeweiligen Drehachsen, d.h. verläuft zwischen den beiden Drehachsen.

Die Zahnräder der Einzugswalze und der Messerwalze können bevorzugt aus Stahl oder aus Kunststoff sein. Es ist auch möglich, dass das eine Zahnrad, beispielsweise dasjenige der Messerwalze, aus Stahl und das andere Zahnrad, beispielsweise dasjenige der Einzugswalze, aus Kunststoff gebildet ist. Spitz zulaufende Zahnköpfe eines Stahlzahnrades können dabei beim Zusammenwirken mit einem Kunststoffzahnrad nachteilig sein.

Die Erfindung umfasst weiterhin eine Einzugswalze, die für einen vorstehend beschriebenen Stranggranulator geeignet ist. Die Einzugswalze umfasst daher ein Zahnrad, welches eingerichtet ist, die Einzugswalze mit der Messerwalze des Stranggranulators über ein Zahnrad der Messerwalze zu koppeln. Die Geometrie der Zahnradzähne des Zahnrades der Einzugswalze basiert, wie bereits vorstehend mit Bezug auf den Granulator beschrieben, auf einem Ausgangsprofil gemäß einer Evolventenverzahnung oder einer Zykloidenverzahnung. Dieses Profil ist dahingehend modifiziert, dass zumindest eine Flanke der Zahnradzähne in einem ersten Flankenbereich dem Ausgangsprofil folgt und in einem zweiten Flankenbereich an einem kopfseitigen Ende in Richtung zur Zahnmitte von einer die Flanke gemäß dem Ausgangsprofil definierenden Rollkurve abweicht.

Die Zahnköpfe der Zahnräder des Zahnrades der Einzugswalze sind vollständig abgerundet oder spitz zulaufend ausgebildet, wie dies vorstehend im Detail mit Bezug auf den Granulator beschrieben wurde.

Schließlich betrifft die Erfindung eine Messerwalze, welche für einen vorstehend beschriebenen Stranggranulator geeignet ist. Auch die Messerwalze umfasst ein Zahnrad, welches eingerichtet ist, die Messerwalze mit einer Einzugswalze des Stranggranulators über ein Zahnrad der Einzugswalze zu koppeln. Die Geometrie der Zahnradzähne des Zahnrades der Messerwalze ist dabei analog ausgebildet zur vorstehend beschriebenen Geometrie der Zähne des Zahnrades der Einzugswalze.

Die vorliegende Erfindung wird im Folgenden mit Bezug auf die beiliegenden Zeichnungen beispielhaft beschrieben. Darin zeigen:
- Figur 1: eine schematische Schnittansicht einer bevorzugten Ausführungsform eines erfindungsgemäßen Stranggranulators;
- Figuren 2: bis 6 bevorzugte Ausführungsformen modifizierter Zahnprofile, und
- Figur 7: schematisch eine Seitenansicht eines Zahnrades einer Einzugswalze und eines Zahnrades einer Messerwalze, die in einem Stranggranulator angeordnet sind und eingerichtet sind, relativ zueinander linear verlagert zu werden.

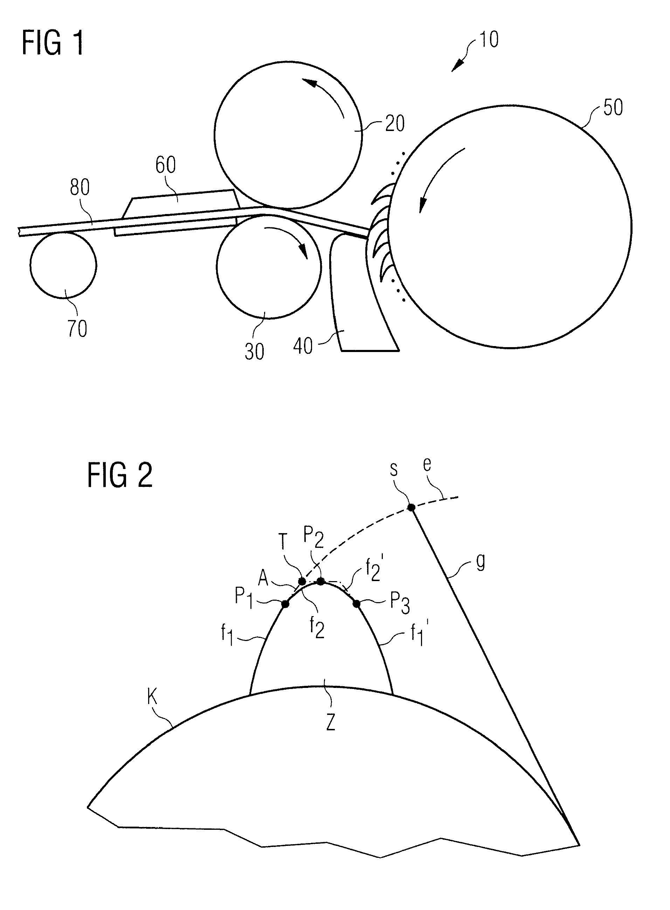

Figur 1 zeigt schematisch in Schnittansicht einen Ausschnitt eines Kunststoffstranggranulators 10, der eine untere Einzugswalze 30 und eine obere Einzugswalze 20 zum Einziehen von zu granulierenden Strängen 80 zwischen den Einzugswalze 20, 30 hindurch umfasst. Die Stränge 80 können dabei weiterhin über eine Führungsrolle 70 und/oder durch einen Einzugsschacht 60 geführt werden.

Ein Ambossmesser 40 und eine Messerwalze 50, beispielsweise in Form einer Schermesserwalze, dienen zum Granulieren der eingezogenen Stränge 80.

Zumindest eine der Einzugswalze 20, 30, vorzugsweise die untere Einzugswalze 30, ist (in nicht gezeigter Weise) über Zahnräder mit der Messerwalze 50 koppelbar.

Die koppelbare Einzugswalze 20, 30 ist relativ zu der Messerwalze 50 verlagerbar, beispielsweise entlang einer (nicht gezeigten) Führung, über die die Einzugswalze 20, 30 von der Messerwalze 50 weg- und zu der Messerwalze 50 hingeführt werden kann. Durch das Weg- und Hinführen der Einzugswalze 20, 30 von und zu der Messerwalze 50 geraten die Zahnräder, über welche die beiden Walzen 20, 30 und 50 koppelbar sind, außer Eingriff und wieder in Eingriff.

Um beim Zusammenführen der Zahnräder ein stumpfes Aufeinanderstoßen der Zahnköpfe der jeweiligen Zahnräder zu vermeiden, besitzen die Zähne der jeweiligen Zahnräder ein spezifisches Profil im Bereich des Zahnkopfes, welches ein solches stumpfes Aufeinandertreffen verhindert und ein Einfädeln der Zahnräder unterstützt, ohne dass die Zahnräder dabei über die Maßen abgenutzt oder gar beschädigt werden. Bevorzugte Ausführungsformen solcher modifizierten Zahnkopfprofile werden im Folgenden mit Bezug auf die Figuren 2 bis 6 beispielhaft beschrieben.

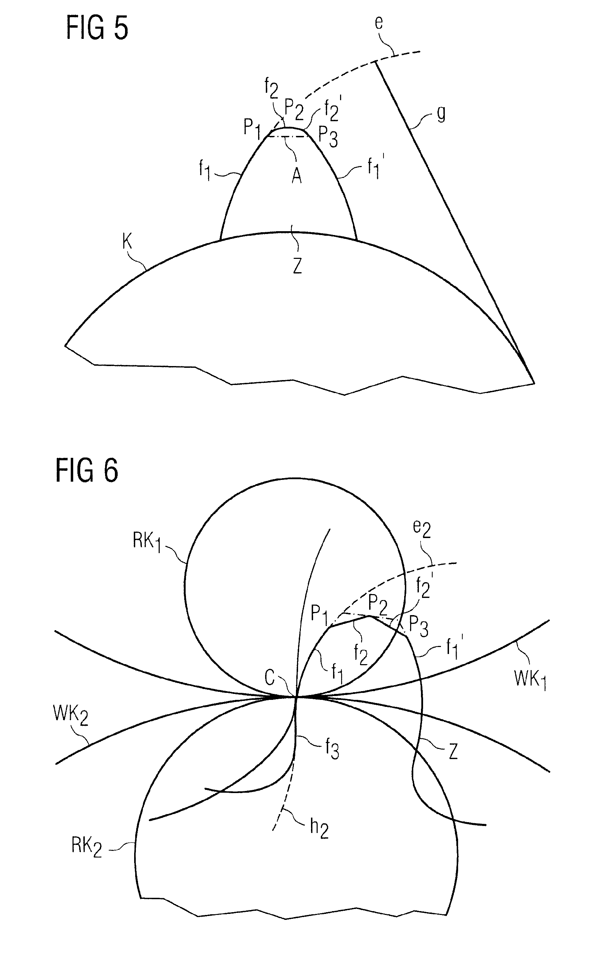

Vorzugsweise basieren die modifizierten Profile der Zähne der verwendeten Zahnräder auf herkömmlichen Ausgangsprofilen gemäß einer bekannten Evolventenverzahnung (Figuren 1 bis 5) oder einer Zykloidenverzahnung (Figur 6). Die Flanke eines Zahns eines solchen Zahnrades wird dabei in bekannter Weise von einer entsprechenden Rollkurve definiert.

Im Falle einer Evolventenverzahnung (vgl. z.B. Fig. 2) entsteht die Rollkurve, die Evolvente e, dadurch, dass eine Gerade g auf einem Kreis K abgerollt wird, wobei die Bahn eines Punktes S auf der Gerade g eine Evolvente e beschreibt.

Im Falle einer Zykloidenverzahnung (vgl. Figur 6) werden die Flanken durch Rollkurven in Form von Zykloiden definiert. Beispielsweise definiert die Epizykloide e2, welche durch Abrollen des Rollkreises RK1 auf dem Wälzkreis WK2 entsteht, den kopfseitigen Bereich f1 der Flanke des Zahns Z. In analoger Weise definiert die Hypozykloide h2, welche durch Abrollen des Rollkreises RK2 in dem Wälzkreis WK2 entsteht, den fußseitigen Anteil f3 der Flanke des Zahns Z.

Allgemein entstehen die modifizierten Profile bevorzugt dadurch, dass das Ausgangsprofil A eines Zahns, welches jeweils durch die strichpunktierte Linie angedeutet ist, dahingehend modifiziert wird, dass zumindest eine Flanke des Zahns in einem ersten Flankenbereich f1, f3 dem Ausgangsprofil folgt, vorzugsweise vom fußseitigen Teil der Flanke bis in den kopfseitigen Teil der Flanke hinein. Am kopfseitigen Ende hingegen weicht die Flanke dann in Richtung zur Zahnmitte von einer die Flanke gemäß dem Ausgangsprofil A definierenden Rollkurve e, e2 ab. Dies kann auf mannigfaltige Weise geschehen, wie dies in den Figuren 2 bis 6 angedeutet ist und nachfolgend genauer beschrieben wird.

Die beschriebene Modifikation kann dabei einmal dadurch entstehen, dass im Vergleich zu dem Ausgangsprofil A Zahnmaterial fehlt, sich das Profil des modifizierten Zahns somit vollständig innerhalb des Profils des ursprünglichen Zahnes befindet. Beispiele sind in den Figuren 1 bis 4 und 6 gezeigt.

Alternativ kann sich das modifizierte Profil auch dadurch ergeben, dass das Ausgangsprofil A vergrößert wird, wie dies beispielhaft in Figur 5 gezeigt ist. In diesem Fall liegt das Ausgangsprofil vollständig im modifizierten Profil.

Es versteht sich, dass eine Modifikation auch dahingehend erfolgen kann, dass das modifizierte Profil bereichsweise innerhalb des Ausgangsprofil liegt, bereichsweise darüber hinaus ragt. Es würde sich dann beispielsweise eine Ausführungsform ergeben, welche Merkmale der Ausführungsform nach Fig. 2 mit Merkmalen der Ausführungsform nach Fig. 5 kombiniert: Die kopfseitigen Flankenbereiche f2, f2' würden sich unterhalb der strichpunktierten Kopflinie des Ausgangsprofils zur Zahnmitte hin von der Evolvente e trennen, sich jedoch zu dem gerundeten Kopfende erst oberhalb dieser Kopflinie treffen.

Bevorzugt wird eine Modifikation derart ausgeführt werden, dass beide Flanken eines Zahns in gleicher Weise modifiziert werden, wie dies in den Figuren 2, 3, 5 und 6 gezeigt ist. Vorzugsweise erfolgt die Modifikation an beiden Flanken in derselben Weise. Es ergibt sich dann ein symmetrisches modifiziertes Zahnprofil.

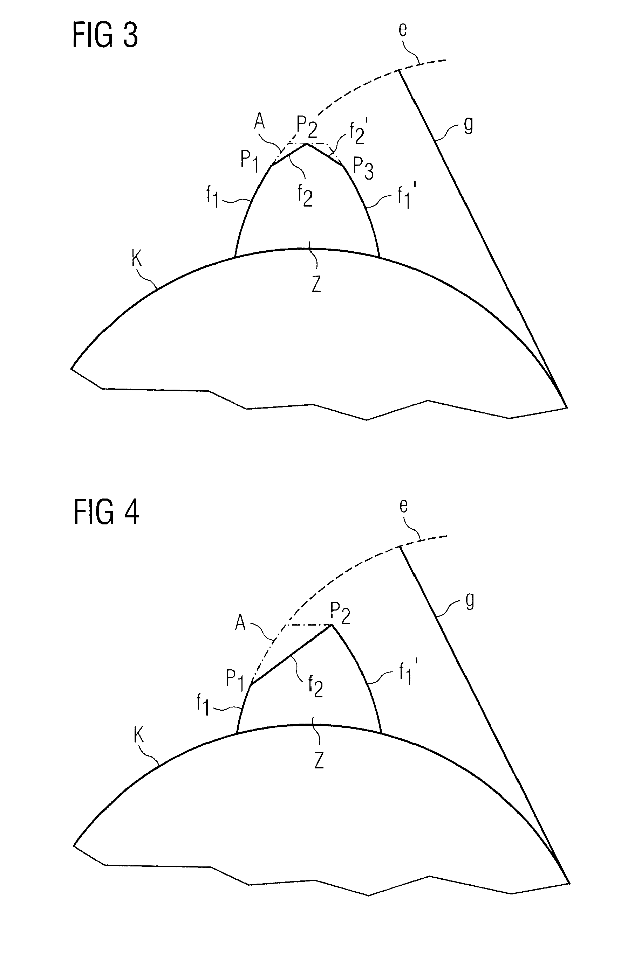

Grundsätzlich ist es aber auch möglich, dass lediglich eine Flanke modifiziert wird, wie dies beispielhaft in Figur 4 gezeigt ist. Das modifizierte Zahnprofil erscheint dann unsymmetrisch. Eine solche Modifikation kann vorteilhaft dann ausgeführt werden, wenn das Zahnrad lediglich in einer Richtung betrieben wird. Eine Modifikation einer nicht treibenden bzw. nicht angetriebenen Flanke beeinträchtigt dann in keiner Weise die Funktionalität des Zahnrades.

In der Regel werden sowohl die Zähne des Zahnrades, welches der Messerwalze 50 zugeordnet ist, als auch die Zähne des Zahnrades, welches der Einzugswalze 20 oder 30 zugeordnet ist, in gleicher oder zumindest ähnlicher Weise modifiziert. In dem Fall, dass beispielsweise abgerundete Zahnkopfprofile vorgesehen sind, wie sie in den Figuren 2, 5 oder 6 gezeigt sind, können sich allerdings problemlos die jeweiligen Kopfradien unterscheiden. In gleicher Weise kann im Fall spitz zulaufende Kopfprofile, welche in Figur 3 gezeigt sind, die Steilheit der Flankenbereiche f2, f2' bei Zähnen der verschiedenen Zahnräder unterschiedlich sein.

Bei der Verwendung unsymmetrischer Profile, wie im Beispiel von Figur 4, bietet es sich an, dass Zähne der jeweiligen Zahnräder in analoger Weise unsymmetrisch ausgebildet sind.

Sämtliche gezeigten Ausführungsformen modifizierter Zahnkopfprofile verhindern, dass die Zahnköpfe der Zähne der Zahnräder beim Zusammenführen der Zahnräder stumpf aufeinanderstoßen. Im Gegensatz dazu, werden aufeinandertreffende Zähne aufgrund des Kopfprofils unmittelbar aneinander vorbei geführt, so dass ein Einfädeln der jeweiligen Zahnräder in einfacher Weise unterstützt wird. Eine Beschädigung oder verstärkte Abnutzung der Zahnräder ist nicht zu befürchten. Die Funktionalität der jeweiligen Zahnräder leidet unter der Modifikation praktisch nicht, da die einem Eingriff dienende effektive Flankenlänge allenfalls geringfügig verkürzt wird.

Die Zahnräder können aus Stahl oder Kunststoff gefertigt sein.

Abschließend werden einige konkrete Beispiele modifizierter Zahnprofile detailliert beschrieben.

In Figur 2 ist ein modifiziertes Zahnprofil Z gezeigt, welches auf einem Zahnprofil einer Evolventenverzahnung basiert. Das modifizierte Profil ist in symmetrischer Weise am kopfseitigen Ende abgerundet ausgebildet. Ein erster Flankenbereich f1, f1' folgt dem Ausgangsprofil, ein kopfseitiger, zweiter Flankenbereich f2, läuft innerhalb des ursprünglichen Zahnprofils. Mit anderen Worten ist der Kopf des ursprünglichen Zahnprofils in symmetrischer Weise geringfügig abgerundet. Die effektive Flankenlänge verkürzt sich lediglich um einen geringen Anteil, die Strecke P1-T.

Die in Figur 3 gezeigte Ausführungsform entspricht derjenigen aus Figur 2 mit dem Unterschied, dass der Zahnkopf nicht abgerundet, sondern spitz zulaufend ausgeführt ist. Der kopfseitige, modifizierte Flankenbereich f2, f2' verläuft nun nicht in einer Kreisbogenform, wie in Figur 2, sondern geradlinig. Die jeweiligen Flankenbereiche f2, f2' treffen sich in der Spitze P2 am Kopf des modifizierten Zahns Z.

Figur 4 zeigt eine unsymmetrische Variante eines modifizierten Zahns. Die rechte Flanke f1 verbleibt vollständig unverändert im Vergleich zum Ausgangsprofil A, die linke Flanke ist im fußseitigen Anteil f1 im Vergleich zum Ausgangsprofil A unverändert. Das spitz zulaufend modifizierte Profil entsteht dadurch, dass der Zahn vom Punkt P1 bis zur Spitze P2 abgeflacht ist.

Die Ausführungsform in Figur 5, die ebenfalls auf einer Evolventenverzahnung als Ausgangsprofil basiert, unterscheidet sich von den Ausführungsformen der Figur 2 bis 4 dadurch, dass das Ausgangsprofil A vergrößert worden ist. Ein abgerundetes Kopfprofil wird hier dadurch erreicht, dass im Rahmen eines vorhandenen Kopfspiels eine Rundung hinzugefügt wird. Die effektiven Flankenlängen werden somit nicht verkürzt. Die kopfseitigen Flankenbereiche f2, f2' verlaufen innerhalb der Evolvente e.

Alternativ kann, anstelle einer Rundung, auch eine Spitze zu dem bestehende Profil hinzugefügt werden (vgl. Fig. 3).

Die Ausführungsform, welche in Figur 6 gezeigt ist, entspricht im Wesentlichen der Ausführungsform aus Figur 2, wobei das Ausgangsprofil hier eine Zykloidenverzahnung und keine Evolventenverzahnung ist.

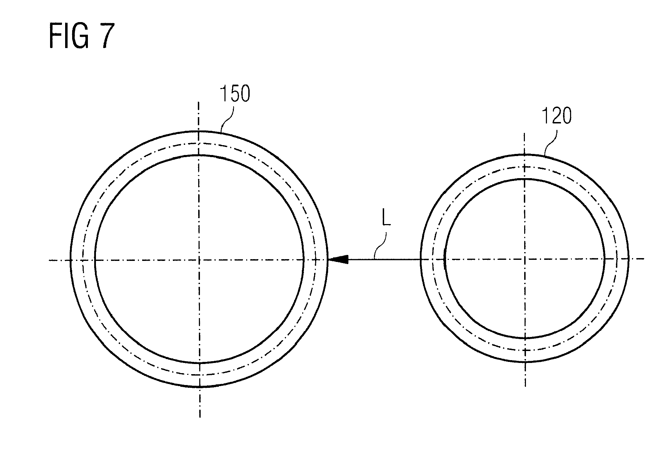

In Fig. 7 ist schematisch eine Anordnung eines Zahnrades 120 einer (nicht gezeigten) Einzugswalze 20 und eines Zahnrades 150 einer (nicht gezeigten) Messerwalze 50 dargestellt. Die beiden Zahnräder 120, 150 sind in dem (nicht gezeigten) Stranggranulator 10 eingerichtet, entlang einer geraden Linie L linear zueinander verlagert zu werden, um sie, zum Koppeln der Einzugswalze 20 mit der Messerwalze 50, in Eingriff und, zum Entkoppeln der Walzen 20, 50, wieder außer Eingriff zu bringen. Die gerade Linie L steht jeweils senkrecht zu den Drehachsen der Zahnräder 120, 150 und verbindet diese Drehachsen miteinander.

Gerade im Zusammenhang mit einer solchen linearen Verlagerung der Zahnräder 120, 150 zueinander hat sich eine vorstehend im Detail beschriebene Zahnkopfgeometrie mit vollständig abgerundeten oder spitz zulaufenden Zahnköpfen als vorteilhaft erweisen. Denn bei einem derartigen linearen Zusammenführen der Zahnräder ist - bei herkömmlicher Zahnkopfgeometrie - die Gefahr eines stumpfen Zusammenstoßens von Zahnköpfen am höchsten, wesentlich höher als z.B. in dem Fall, dass die Zahnräder 120, 150 gemäß einer Schwenkbewegung, die beispielsweise einem Kreisbogenabschnitt folgt, zueinander geführt werden.

## Patentansprüche

1. Stranggranulator (10), umfassend eine untere Einzugswalze (30) und eine obere Einzugswalze (20) zum Einziehen von zu granulierenden Strängen (80) zwischen den Einzugswalzen (20; 30) hindurch sowie ein Ambossmesser (40) und eine Messerwalze (50) zum Granulieren der eingezogenen Stränge (80), wobei zumindest eine der Einzugswalzen (20; 30) und die Messerwalze (50) relativ zueinander verlagerbar und über Zahnräder miteinander koppelbar sind, **dadurch gekennzeichnet, dass**
die Geometrie der Zahnradzähne (Z) auf einem Ausgangsprofil (A) gemäß einer Evolventenverzahnung oder einer Zykloidenverzahnung basiert, welches dahingehend modifiziert ist, dass zumindest eine Flanke der Zahnradzähne (Z) in einem ersten Flankenbereich (f1; f3) dem Ausgangsprofil (A) folgt und in einem zweiten Flankenbereich (f2) am kopfseitigen Ende in Richtung zur Zahnmitte von einer die Flanke gemäß dem Ausgangsprofil (A) definierenden Rollkurve (e; e2) abweicht, wobei Zahnköpfe der Zahnradzähne (Z) vollständig abgerundet oder spitz zulaufend ausgebildet sind.

2. Stranggranulator (10) nach Anspruch 1, wobei die zumindest eine mit der Messerwalze (50) über Zahnräder koppelbare Einzugswalze (20; 30) entlang einer Führung von der Messerwalze (50) weg- und zu der Messerwalze (50) hinführbar ist.

3. Stranggranulator (10) nach Anspruch 1 oder 2, wobei die Zahnräder aus Stahl oder aus Kunststoff gebildet sind.

4. Stranggranulator (10) nach einem der Ansprüche 1 bis 3, **dadurch gekennzeichnet, dass** ein Zahnrad (120) der zumindest einen Einzugswalze (20) und ein Zahnrad (150) der Messerwalze (50), über welche Zahnräder (120; 150) die Einzugswalze (20) und die Messerwalze (50) koppelbar sind, eingerichtet sind, relativ zueinander entlang einer geraden Linie (L) verlagert zu werden, die jeweils senkrecht zu den Drehachsen der Zahnräder (120; 150) steht und die jeweiligen Drehachsen verbindet.

5. Einzugswalze (20; 30), geeignet für einen Stranggranulator (10) nach einem der Ansprüche 1 bis 4, wobei die Einzugswalze (20; 30) ein Zahnrad umfasst, welches eingerichtet ist, die Einzugswalze (20; 30) mit der Messerwalze (50) des Stranggranulators (10) über ein Zahnrad der Messerwalze (50) zu koppeln, **dadurch gekennzeichnet, dass**
die Geometrie der Zahnradzähne des Zahnrades der Einzugswalze (20; 30) auf einem Ausgangsprofil (A) gemäß einer Evolventenverzahnung oder einer Zykloidenverzahnung basiert, welches dahingehend modifiziert ist, dass zumindest eine Flanke der Zahnradzähne in einem ersten Flankenbereich (f1 ; f3) dem Ausgangsprofil (A) folgt und in einem zweiten Flankenbereich (f2) am kopfseitigen Ende in Richtung zur Zahnmitte von einer die Flanke gemäß dem Ausgangsprofil (A) definierenden Rollkurve (e; e2) abweicht, wobei
Zahnköpfe der Zahnradzähne (Z) vollständig abgerundet oder spitz zulaufend ausgebildet sind.

6. Messerwalze (50), geeignet für einen Stranggranulator (10) nach einem der Ansprüche 1 bis 4, wobei die Messerwalze (50) ein Zahnrad umfasst, welches eingerichtet ist, die Messerwalze (50) mit einer Einzugswalze (20; 30) des Stranggranulators (10) über ein Zahnrad der Einzugswalze (20; 30) zu koppeln, **dadurch gekennzeichnet, dass**
die Geometrie der Zahnradzähne des Zahnrades der Messerwalze (50) auf einem Ausgangsprofil (A) gemäß einer Evolventenverzahnung oder einer Zykloidenverzahnung basiert, welches dahingehend modifiziert ist, dass zumindest eine Flanke der Zahnradzähne in einem ersten Flankenbereich (f1; f3) dem Ausgangsprofil (A) folgt und in einem zweiten Flankenbereich (f2) am kopfseitigen Ende in Richtung zur Zahnmitte von einer die Flanke gemäß dem Ausgangsprofil definierenden Rollkurve (e; e2) abweicht, wobei Zahnköpfe der Zahnradzähne (Z) vollständig abgerundet oder spitz zulaufend ausgebildet sind.
